(19) Europäisches Patentamt
European Patent Office
Office européen des brevets

(11) Veröffentlichungsnummer: **0 142 018**
**B1**

(12) # EUROPÄISCHE PATENTSCHRIFT

(45) Veröffentlichungstag der Patentschrift: **29.04.87**

(51) Int. Cl.⁴: **C 02 F 1/04**, C 02 F 1/10, C 02 F 1/16

(21) Anmeldenummer: **84112074.4**

(22) Anmeldetag: **09.10.84**

(54) **Verfahren und Vorrichtung zur Abwasserreinigung.**

(30) Priorität: **14.10.83 DE 3337360**

(43) Veröffentlichungstag der Anmeldung: **22.05.85 Patentblatt 85/21**

(45) Bekanntmachung des Hinweises auf die Patenterteilung: **29.04.87 Patentblatt 87/18**

(84) Benannte Vertragsstaaten: **AT BE CH DE FR GB IT LI LU NL SE**

(56) Entgegenhaltungen:
**CH-A-493 435**
**FR-A-2 351 912**
**US-A-4 388 875**

(73) Patentinhaber: **Kernforschungsanlage Jülich Gesellschaft mit beschränkter Haftung, Postfach 1913, D-5170 Jülich 1 (DE)**
Patentinhaber: **Kalawrytinos, Georg, Dr., Am Steinbruch 2, D-5190 Stolberg (DE)**

(72) Erfinder: **Iniotakis, Nicolaos, Kopernikusstrasse 64, D-5170 Jülich (DE)**
Erfinder: **Fröhling, Werner, Dr., Keltenstrasse 38, D-5160 Düren (DE)**
Erfinder: **Kalawrytinos, Georg, Dr., Am Steinbruch 2, D-5190 Stolberg (DE)**
Erfinder: **von der Decken, Claus- Benedict, Prof. Dr., Reumontstrasse 34, D-5100 Aachen (DE)**

**EP 0 142 018 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung bezieht sich auf ein Verfahren zur Abwasserreinigung durch Verdampfen des zu reinigenden Wassers in einen Schleppgasstrom und Entfernung des dabei gebildeten Rückstandes. Gegenstand der Erfindung ist auch eine Vorrichtung zur Durchführung dieses Verfahrens.

Bei der Abwasserreinigung bereiten vor allem im Abwasser gelöste Verunreinigungen und solche Verschmutzungen Schwierigkeiten, die im Abwasser zwar nicht gelöst, jedoch wegen ihrer Feinheit nicht sedimentierbar sind. Von Bedeutung sind insbesondere industrielle Abwässer, für die noch vor allgemeiner Reinigung in Kläranlagen zusätzliche Reinigungsstufen, wie chemisches Ausfällen, Neutralisieren der Verunreinigungen oder das Entgiften durch Zugabe von Oxidationsmitteln sowie der Einsatz von Ionenaustauschern erforderlich sind. In den meisten Fällen fallen bei der Reinigung solcher industrieller Abwässer auch metallische Verbindungen oder Salze an, deren Rückgewinnung und Rezyklierung wirtschaftlich von Interesse ist. Angestrebt wird eine qualitativ weitgehende Reinigung des Abwassers bis hin zur Reinheit destillierten Wassers. Zu solchen Verfahren gehört auch die Brackwasseraufbereitung und die Meerwasserentsalzung. Letzteres insbesondere in solchen Gegenden, die an Grund- und Regenwasserarmut leiden.

Eine weitgehende Reinigung von Wasser läßt sich durch Destillation erreichen. Das Wasser wird in einem Verdampfer bis auf Sättigungstemperatur erwärmt, der dabei gebildete Dampf wird abgezogen und in einem gekühlten Kondensator wieder niedergeschlagen. Bei vollständiger Verdampfung bleiben im Verdampfer diejenigen Substanzen, die nicht verdampfbar sind, als fester Rückstand zurück. Bei der hier beschriebenen offenen Destillation wird im allgemeinen das Wasser nicht vollständig verdampft, sondern eine stark aufgesalzte flüssige Fraktion vom Sumpf der Destillationskolonne abgezogen. In dieser Weise läßt sich die offene Destillation auch kontinuierlich durchführen. Der stark aufgesalzte Rückstand ist jedoch in den meisten Fällen in der von der Destillierapparatur abgezogenen Form nicht wiederverwendbar und bedarf weiterer Aufarbeitung.

Als Trennverfahren ist auch die Pervaporation bekannt, vgl. beispielsweise Chemie-Ingenieur-Technik, 1982, Nr. 3, S. 229 - 240, insbesondere S. 232. Bei diesem Verfahren wird die zu reinigende Flüssigkeit primärseitig an einer Membran entlanggeführt, auf deren Sekundärseite die durch die Membran permeierenden Komponenten der Flüssigkeit in dampfförmigen Zustand überführt und von einem Trägergas abtransportiert werden. Bei diesem Verfahren wird eine hohe Selektivität bei Abtrennung gelöster Komponenten erreicht. Die nicht permeierenden Substanzen verbleiben in der Rückstandsfraktion auf der Primärseite der Membran und lassen sich daraus ohne zusätzliche Maßnahmen nicht abtrennen.

Aufgabe der Erfindung ist es, ein Verfahren zur Reinigung von Wasser durch Verdampfen des Wassers zu schaffen, bei dem die im Abwasser enthaltenen, nicht verdampfbaren Substanzen ohne Anfall von Schlamm oder hochsalzhaltiger flüssiger Rückstandsfraktion als nicht flüchtige Phase unmittelbar rückgewinnbar ist, wobei der Reinheitsgrad des abziehenden Dampfes bis zum Reinheitsgrad destillierten Wassers einstellbar sein soll. Darüberhinaus soll das Verfahren in einfacher Weise mit geringem zusätzlichen Chemikalienaufwand auch bei unterschiedlicher Metall, oder Salzkonzentration im Abwasser durchführbar sein.

Diese Aufgabe wird beim Verfahren der eingangs erwähnten Art gemäß der Erfindung durch die in Patentanspruch 1 angegebenen Maßnahmen gelöst. Danach wird das Abwasser in einen Schleppgasstrom in feiner Verteilung eingebracht und das Schleppgas-Wassergemisch bis zu einer Temperatur erhitzt, die oberhalb der Sättigungstemperatur des bei der Erhitzung entstehenden Wasserdampfes niegt. Die Sättigungstemperatur ist abhängig vom Druck im Schleppgas-Wasserdampfgemisch, der im folgenden Gesamtdruck $P_t$ genannt wird, sowie vom Partialdruckverhältnis von Partialdruck des Schleppgases $P_{sch}$ zum Gesamtdruck $P_t$, d.h. $P_{sch}/P_t$. Je geringer der Gesamtdruck und je höher das Partialdruckverhältnis $P_{sch}/P_t$ ist, d.h., je weniger Wasser pro Volumeneinheit Im Schleppgasstrom enthalten ist, um so niedriger ist die Sättigungstemperatur. Würde das Schleppgas-Wassergemisch jedoch nur bis zur Sättigungstemperatur erhitzt, so würde eine Trennung zwischen Wasser und das Wasser verunreinigenden nicht verdampfbaren Substanzen nicht optimal erreichbar sein. Gemäß der Erfindung ist deshalb eine wassertröpfchenfreie Einstellung des sich bei der Verdampfung bildenden Schleppgas-Wasserdampfgemisches vorgesehen, also eine Überhitzung des Schleppgas-Wasserdampfgemisches über die Sättigungstemperatur hinaus. In einem solchen zustand liegen die nicht verdampfbaren Substanzen als elektrisch neutrale Feststoffpartikeln vor. Je feiner die Verteilung des Wassers im Schleppgasstrom ist, um so homogener ist das Schleppgas-Wassergemisch, das sich als Nebel ausbildet. Die feine Verteilung- des Wassers im Schleppgas begünstigt den Wärmeübergang und beschleunigt die Verdampfung. Aus dem überhitzten Schleppgas-Wasserdampfgemisch lassen sich die Feststoffpartikeln als trockene Substanz ausfiltern und vom Abscheider zuruckgewinnen.

Gemäß der Erfindung ist vorgesehen, das gereinigte Schleppgas-Wasserdampfgemisch zu komprimieren und anschließend zur Aufheizung des die Verunreinigungen enthaltenden zu reinigenden Schleppgas-Wassergemisches einzusetzen. Das komprimierte Schleppgas-Wasserdampfgemisch wird dabei bis unter die für diesen Druck gegebene Sättigungs- bzw. Taupunktstemperatur des Wasserdampfes abgekühlt, so daß die Verdampfungsenthalpie, die zuvor zur Verdampfung des zu reinigenden Wassers innerhalb des Schleppgas-Wassergemisches benötigt wurde, auf höherem Druckniveau zurückgewonnen wird. Der für den Reinigungsprozeß des Wassers insgesamt notwendige Energieaufwand reduziert sich damit erheblich. Für den Fall, daß für die Durchführung des Prozesses Wärme aus Drittguellen zur Verfügung steht, beispielsweise

billige Abwärme aus physikalischen oder chemischen Prozessen oder Wärme aus wirtschaftlich verwertbarer Solarenergie, ist es zur Deckung der Wärmeverluste bei einem Reinigungsprozeß neben der Kompression des gereinigten Schleppgas-Wasserdampfgemisches zweckmäßig, letzteres zusätzlich zu erhitzen, um das zu reinigende Schleppgas-Wassergemisch auf die gewünschte Temperatur aufzuheizen, Patentanspruch 2. Eine weitere Optimierung der Wärmebilanz des Gesamtprozesses wird dadurch erreicht, daß das bei der Abkühlung des gereinigten Schleppgas-Wasserdampfgemisches entstandene Kondensat zur Vorerhitzung des zu reinigenden Abwassers genutzt wird. Zugleich ist vorgesehen, das Schleppgas zu rezyklieren, Patentanspruch 3. Der Druck im Schleppgas wird dabei dem Druck am Schleppgaseingang angepaßt, Patentanspruch 4.

Sollen im Schleppgas-Wasserdampfgemisch enthaltene Substanzen als reine Salze gewonnen werden, so wird die Temperatur des Schleppgas-Wasserdampfgemisches vor der Filtration so eingestellt, daß sie oberhalb der im Schleppgas-Wasserdampfgemisch gegebenen Zersetzungstemperatur der nicht erwünschten Hydrate liegt, Patentanspruch 5. Durch Wahl der Überhitzungstemperatur im Schleppgas-Wasserdampfgemisch vor Filtration ist es also möglich, den Zustand der gewonnenen Feststoffpartikeln festzulegen, also zu bestimmen, ob reine Salze oder Hydrate anfallen sollen.

Zur Einstellung eines wassertröpfchenfreien Schleppgas-Wasserdampfgemisches ist eine Überhitzung des Schleppgas-Wasserdampfgemisches zumindest um ca. 15 bis 20 °C über die Sättigungstemperatur erforderlich. Dies ist nicht nur durch Wärmezufuhr erreichbar, beispielsweise durch einen dem Verdampfer nachgeschalteten Uberhitzer. Vielmehr kann es alternativ oder in Ergänzung hierzu zweckmäßig sein, das Schleppgas-Wasserdampfgemisch auf einen Druck zu entspannen, bei dem das Schleppgas-Wasserdampfgemisch den Abscheider wassertröpfchenfrei durchströmt, Patentanspruch 6. Die abzuscheidenden Feststoffpartikeln sind auch in diesem Falle in trockenem Zustand oder als Hydrat gewinnbar. Um die Abscheidung zu erleichtern, werden die Feststoffpartikeln nach Patentanspruch 7 vor Eintritt des Schleppgas-Wasserdampfgemisches in den Abscheider koaguliert.

Günstige Arbeitsverhältnisse für den Gesamtprozess ergeben sich im zu reinigenden Schleppgas-Wasserdampfgemisch bei Partialdruckverhaltaissen von Schleppgaspartialdruck $P_{sch}$ zu Gesamtdruck $P_t$ im Bereich von $P_{sch}/P_t = 0{,}2$ bis 0,8, Patentanspruch 8. Unter Berücksichtigung der Wärmerückgewinnung durch Kondensation ist es je nach zur Verfügung stehender Wärme aus Drittquellen zweckmäßig, den Druck im komprimierten Schleppgas- Wasserdampfgemisch im Bereich zwischen 3 bis 20 bar einzustellen, Patentanspruch 9.

Im folgenden wird die Erfindung anhand von Ausführungsbeispielen näher erläutert. Auch eine Anlage zur Durchführung des Verfahrens, die ebenfalls Gegenstand der Erfindung ist, wird beschrieben. Die zeichnung zeigt im einzelnen:

Figur 1 Fließschema einer Anlage zur Abwasserreinigung,

Figur 2 Sättigungs- bzw. Taupunktstemperatur vom Wasser in einem Schleppgas-Wasserdampfgemisch in Abhängigkeit vom Gesamtdruck $P_t$ und Partialdruckverhältnis $P_{sch}/P_t$.

Figur 1 zeigt eine Anlage, bei der das zu reinigende Wasser mittels einer Flüssigkeitspumpe 1 über eine Druckleitung 2 zum Vorwärmer 3 befördert wird. Der Vorwärmer 3 ist als Gegenstromwärmetauscher ausgebildet. Im Ausführungsbeispiel dient als Heizmedium für den Vorwärmer 3 in einer Kondensatleitung 4 strömendes Kondensat. Das Kondensat wird von einer Kondensatpumpe 5 durch den Vorwärmer 3 gefördert.

Das zu reinigende Wasser wird nach erster Erwärmung im Vorwärmer 3 über eine Wasserleitung 6 zum Verdampfer 7 geführt und dort mittels einer Einrichtung 8 in einem Schleppgasstrom fein verteilt, im Ausführungsbeispiel mittels einer Düse unmittelbar in den Schleppgasstrom eingesprüht. Der Schleppgasstrom strömt über eine Schleppgasleitung 9 zum Verdampfer 7. Die Anordnung der Düse am Eingang 10 des Verdampfers 7 ist in der Zeichnung nur schematisch angegeben. Es ist dafür Sorge zu tragen, daß mit dem Schleppgasstrom in den Verdampfer 7 nur in feiner Verteilung überführtes Wasser eingetragen wird. Statt einer Sprühdüse sind selbstverständlich auch andere Flüssigkeitsverteiler einsetzbar. Eine sehr homogene Verteilung wird bei Ausbildung von Nebel erreicht.

Im Verdampfer 7 wird das vom Eingang 10 her einströmende Schleppgas-Wassergemisch auf eine Temperatur erhitzt, die oberhalb der Sättigungstemperatur des Wasserdampfes im Schleppgas-Wasserdampfgemisch liegt. Die Sättigungstemperatur ist abhängig vom Gesamtdruck $P_t$ im Schleppgas-Wasserdampfgemisch sowie vom Partialdruckverhältnis zwischen Partialdruck des Schleppgases $P_{sch}$ und Gesamtdruck $P_t$. Die Abhängigkeit der Sättigungs- bzw. Taupunktstemperatur vom Gesamtdruck $P_t$ und vom Partialdruckverhältnis $P_{sch}/P_t$ zeigt Figur 2. Je höher der Gesamtdruck $P_t$ und je niedriger das Partialdruckverhältnis $P_{sch}/P_t$ gewählt wird, je mehr Wasser also bei gleichem Gesamtdruck $P_t$ in den Schleppgasstrom eingesprüht wird, um so höher liegt die Sättigungstemperatur.

Für die Einstellung eines wassertröpfchenfreien zustandes ist das Schleppgas-Wasserdampfgemisch zumindest etwa 15 bis 20 °C über die Sättigungstemperatur hinaus zu erhitzen. Reicht für diese Überhitzung die im Verdampfer 7 zur Verfügung stehende Wärme nicht aus, so ist das Schleppgas-Wasserdampfgemisch noch in einem dem Verdampfer 7 nachgeschalteten Überhitzer 7a auf die gewünschte Temperatur aufheizbar.

Der Überhitzer 7a ist über einen Bypaß zugänglich, der parallel zur vom Ausgang 12 des Verdampfers 7 zum Abscheider 13 geführten Zuleitung 14 verläuft. Der Bypaß 11 und damit der Überhitzer 7a werden nach Öffnen bzw. Schließen von Absperrhähnen 15 (im Bypaß 11) und 14a (in der Zuleitung 14) vom Schleppgas-Wasserdampfgemisch durchströmt.

Das überhitzte Schleppgas-Wasserdampfgemisch wird über die Zuleitung 14 zum Abscheider 13 geführt. Der Abscheider 13 ist geeignet, diejenigen Substanzen, die bei der Verdampfung des Wasseranteils im

Schleppgasstrom unverdampft geblieben sind und im wassertröpfchenfrei eingestellten Schleppgas-Wasserdampfgemisch als Feststoffpartikeln enthalten sind, zurückzuhalten. Der Abscheider ist also dem geforderten Reinheitsgrad entsprechend auszuwählen und weist eine den jeweiligen Anforderungen genügende Filterqualität auf. Solche Abscheider sind an sich bekannt. Sie werden beispielsweise in F.A. Henglein, "Grundriß der Chemischen Technik", Verlag Chemie GmbH, Weinheim, 1963, Seiten 74 ff., insbesondere Seite 125, angegeben. Bezüglich der nach dem Verdampfen als Feststoffpartikeln im Schleppgas-Wasserdampfgemisch vorliegenden Verunreinigungen läßt sich somit eine sehr hohe, der jeweils verwendeten Filterqualität entsprechende Reinigung des Schleppgas-Wasserdampfgemisches erzielen.

Die in der Zeichnung schematisch wiedergegebene Anlage weist parallel zur Zuleitung 14 noch einen weiteren Bypaß 11a auf, der zu einem Druckminderer 16 geführt ist. Der Druckminderer 16 ist durch Öffnen bzw. Verschließen von Absperrventilen 17, 17a in Bypaß 11a und Zuleitung 14 einsetzbar. Dies für den Fall, daß die Überhitzung des Schleppgas-Wasserdampfgemisches im Verdampfer nicht ausreichend ist für die wassertröpfchenfreie Einstellung des Schleppgas-Wasserdampfgemisches und für eine zusätzliche Wärmezufuhr im Überhitzer 7a keine billige Wärmequelle zur Verfügung steht, die eine wirtschaftliche Prozeßführung erlaubt. Der Druckminderer 16 ist im Fließschema nach Figur 1 lediglich schematisch als Drosselorgan dargestellt.

Als Abscheider 13 dient dem Ausführungsbeispiel eine Kammer, in der der Schleppgasstrom umgelenkt wird. Die dabei aus dem Schleppgas-Wasserdampfgemisch ausgeschiedenen Feststoffpartikeln sammeln sich am Boden 18 des Abscheiders 13 und werden von dort mittels einer Absaugeinrichtung 19 kontinuierlich entfernt.

Das aus dem Abscheider 13 vom Abscheiderausgang 13a abströmende, gereinigte Schleppgas-Wasserdampfgemisch strömt zur Rückgewinnung der vom Schleppgas-Wasserdampfgemisch mitgeführten Wärme als Heizmedium in Heizmittelleitungen 7' in den Verdampfer 7 zurück. Das Schleppgas-Wasserdampfgemisch wird hierzu mittels eines Kompressors 20 über dessen Saugleitung 21 vom Abscheider entnommen und verdichtet, so daß der Wasseranteil bei Abkühlung und Wärmeabgabe an das zu reinigende Schleppgas- Wassergemisch bei einer Taupunktstemperatur kondensiert, die über der Sättigungstemperatur des Wasserdampfes im zu reinigenden Schleppgas- Wasserdampfgemisch liegt. Die bei Kondensation des gereinigten Wasseranteils gewonnene Wärme geht so an das zu reinigende Schleppgas-Wasser- bzw. -Wasserdampfgemisch über.

Reicht die allein durch Kompression erreichte Temperaturdifferenz zwischen Taupunktstemperatur einerseits und Sättigungstemperatur andererseits im Verdampfer nicht aus, um das zu reinigende Schleppgas-Wasserdampfgemisch wassertröpfchenfrei einzustellen, so kann das komprimierte Schleppgas-Wasserdampfgemisch in einem zusätzlichen Erhitzer 22 erwärmt werden. Der Erhitzer 22 ist im Ausführungsbeispiel in einem Bypaß 11b zur Druckleitung 23 des Verdichters 20 angeschlossen. Das Schleppgas-Wasserdampfgemisch oder ein Teil davon läßt sich durch Steuerung von Absperrventilen 24, 25 in Druckleitung 23 und Bypaß 11b in den Erhitzer 22 leiten. Als Wärmequelle für den Erhitzer lassen sich in gleicher Weise wie für den Uberhitzer 7a für das zu reinigende Schleppgas- Wasserdampfgemisch beispielsweise Abfallwärme oder durch Umwandlung von Solarenergie gewonnene Wärme einsetzen. Je höher das gereinigte Schleppgas-Wasserdampfgemisch komprimiert wird, um so geringer ist die erforderliche zusätzliche Erwärmung des Schleppgas-Wasserdampfgemisches im Erhitzer 22, um einen wassertröpfchenfreien Zustand des zu reinigenden Schleppgas-Wasserdampfgemisches einzustellen.

Vom Erhitzer 22 führt eine Verbindungsleitung 26 zum Verdampfer 7. Im Ausführungsbeispiel ist der Verdampfer 7 als Röhrenkessel mit Röhren als Heizmittelleitungen 7' ausgebildet. In den Röhren strömt das sich im Verdampfer 7 abkühlende komprimierte Schleppgas-Wasserdampfgemisch. Das komprimierte Schleppgas-Wasserdampfgemisch wird unter die Taupunktstemperatur des Wasserdampfes im Schleppgas-Wasserdampfgemisch abgekühlt. Das dabei gebildete Kondensat läuft über die Kondensatleitung 4 zum Vorwärmer 3 ab, während das verbleibende komprimierte Schleppgas über einen Abzug 27 zum Eingang 10 des Verdampfers 7 im Kreislauf zurückgeführt wird. Der Druck im Schleppgas wird hierzu mittels eines Druckreglers 28 auf den Druck in der Schleppgasleitung 9 eingestellt. Am Eingang 10 des Verdampfers 7 erfolgt dann erneut die Beladung des Schleppgasstroms mit zu reinigendem Wasser.

Wird in der beschriebenen Anlage beispielsweise $NiSO_4$-haltiges Abwasser gereinigt, so läßt sich $NiSO_4$ als trockenes Salz oder als Hydrat, $NiSO_4 \cdot 6\,H_2O$, gewinnen. Für das Hydrat beträgt die freie Reaktionsenthalpie $\Delta H$ und die Entropie $\Delta S$ der Reaktion

$NiSO_4 + 6\,H_2O \vee NiSO_4 \cdot 6\,H_2O$

$\Delta H = -85{,}80$ Cal/Mol

$\Delta S = 213{,}23$ Cal/Mol K.

Mit diesen Werten ergibt sich der erforderliche Partialdruck des Wasserdampfes

$$P^{*}_{H_2O}$$

für die Ausbildung von Hydrat aus der Beztehung:

$$P^*_{H_2O} = e^{\frac{1}{6}\frac{\Delta S}{R}} \cdot e^{-\frac{1}{6}\frac{\Delta H}{RT}} \quad bar$$

zu

$$P^*_{H_2O} = 2,42 \quad bar \quad bei \quad T = 150\ °C$$

$$P^*_{H_2O} = 5,17 \quad bar \quad bei \quad T = 170\ °C.$$

Wird das zu reinigende Schleppgas-Wasserdampfgemisch auf einen Gesamtdruck $P_t = 8$ bar eingestellt und in das Schleppgas $NiSO_4$-haltiges Abwasser in feiner Verteilung bis zu einem Partialdruckverhältnis $P_{sch}/P_t$ = 0,5 eingegeben, so ergibt sich für das Abwasser ein Partialdruck von

$$P_{H_2O} = 4\ bar.$$

Diesem Partialdruck entspricht unter Berücksichtigung der angegebenen Werte als Bildungstemperatur für $NiSO_4 \cdot 6\ H_2O$ eine Temperatur von T = 165 °C. Für Temperaturen im Schleppgas-Wasserdampfgemisch oberhalb dieser Temperatur, also für T > 165°C, verbleiben danach im Schleppgas-Wasserdampfgemisch Feststoffpartikeln, die aus trockenem Salz $NiSO_4$ bestehen.

Wird $NiCl_2$-haltiges Abwasser gereinigt, so läßt sich in gleicher Weise entweder das trockene Salz $NiCl_2$ oder ein Hydrat $NiCl_2 \cdot 2\ H_2O$ gewinnen. Für die Hydratbildung ist ein Wasserdampfpartialdruck von

$$P^*_{H_2O} = 5,1806 \cdot 10^7 \cdot e^{-\frac{6958,5}{T}}$$

bar erforderlich. Hieraus folgt:

$$P^*_{H_2O} = 3,716 \quad bar \quad bei \quad T = 150\ °C$$

$$P^*_{H_2O} = 6,529 \quad bar \quad bei \quad T = 165\ °C.$$

Wird der Gesamtdruck des Schleppgas-Wasserdampfgemisches auf 8 bar eingestellt und gilt $P_{sch}/P_t = 0,5$, so ergibt sich als Bildungstemperatur für das Hydrat $NiCl_2 \cdot 2\ H_2O$ eine Temperatur von T = 153°C. Für Temperaturen im Schleppgas- Wasserdampfgemisch oberhalb dieser Temperatur, also für T > 153°C, lassen sich nach dieser Berechnung aus dem Schleppgas-Wasserdampfgemisch also trockene Salzpartikeln $NiCl_2$ abscheiden.

Der Vorwärmer 3 kann beispielsweise so eingestellt sein, daß die zu reinigende Abwassermenge mit einer Temperatur um 60°C oder auch mit einer höheren Temperatur in den Schleppgasstrom einsprühbar ist. Schleppgasstrom und eingesprühte Abwassermenge sind so aufeinander abgestimmt, daß sich im Schleppgas-Wasserdampfgemisch ein Partialdruckverhältnis von Schleppgaspartialdruck $P_{sch}$ zu Gesamtdruck $P_t$ im Bereich zwischen 0,2 bis 0,8 einstellt. Bei einem Partialdruckverhältnis $P_{sch}/P_t$ - 0,4 und einem Gesamtdruck von $P_t$ = 5 bar ergibt sich für den Wasserdampf eine Sättigungstemperatur von etwa 130°C. Zur Einstellung eines wassertröpfchenfreien Zustandes ist eine Überhitzung des Schleppgas-Wasserdampfgemisches von zumindest 15 bis 20°C über die Sättigungstemperatur erforderlich. Geht man davon aus, daß für diese Überhitzung im Verdampfer 7 eine Temperaturdifferenz von 20°C zwischen dem als

Heizmedium verwendeten komprimierten gereinigten Schleppgas-Wasserdampfgemisch und zu reinigendem Schleppgas-Wasserdampfgemisch erforderlich ist, so ist das gereinigte Schleppgas-Wasserdampfgemisch bei gleichem Partialdruckverhältnis $P_{sch}/P_t$ ohne zusätzliche Überhitzung im Erhitzer 22 etwa auf einen Gesamtdruck von 14 bar zu komprimieren. Unter Berücksichtigung der Wärmeübertragung im Verdampfer 7 wird im allgemeinen ein Gesamtdruck im Bereich zwischen 3 bis 20 bar einzustellen sein. Bei geringer Kompression ist zur Einstellung eines wassertröpfchenfreicn Schleppgas-Wasserdampfgemisches ergänzend eine Erwärmung des komprimierten Schleppgas-Wasserdampfgemisches im Erhitzer 22 erforderlich. Alternativ hierzu oder in Kombination mit allen anderen vorgenannten Maßnahmen ist es zur sicheren Einstellung eines wassertrüpfchenfreien Zustandes auch möglich, den Gesamtdruck im Schleppgas-Wasserdampfgemisch noch vor Abscheiden der Feststoffpartikeln im Druckminderer 16 zu erniedrigen. Im Ausführungsbeispiel ist der Druckminderer 16 als Verwirbelungskammer ausgebildet, um die Feststoffpartikeln unter Ausnutzung von Adhäsion zu koagulieren. Aus dem überhitzten Schleppgas-Wasserdampfgemisch werden die enthaltenen Feststoffpartikeln im Abscheider 13 ausgeschieden. Dem Abscheider 13 entströmt ein gereinigtes Schleppgas-Wasserdampfgemisch.

Als Schleppgase lassen sich Helium, Argon, Stickstoff, Luft oder andere Gase einsetzen, die weder mit dem Wasser, noch mit den im Abwasser enthaltenen, zu entfernenden Substanzen reagieren.

Um möglichst wenig Energie bei Kompression und Erhitzung des gereinigten Schleppgas-Wasserdampfgemisches zu verbrauchen, ist der Arbeitsbereich zu optimieren. Bei Partialdruckverhältnissen $P_{sch}/P_t$ zwischen 0,2 bis 0,8, bei Gesamtdrücken zwischen 3 bis 20 bar an Kompressionanstritt und bei Temperaturen unter 220°C lassen sich günstige Arbeitsbereiche für die Durchführung des Verfahrens einstellen.

## Patentansprüche

1. Verfahren zur Abwasserreinigung durch feines Verteilen und Verdampfen des zu reinigenden Wassers in einem Schleppgasstrom unter Wärmeausnutzung von gereinigt abströmendem und komprimiertem Schleppgas-Wasserdampfgemisch zur Aufheizung von Schleppgas und Wasser und Entfernung des durch Überhitzen des Wasserdampfes gebildeten Rückstandes, dadurch gekennzeichnet, daß das Wasser in einen inerten Schleppgasstrom eingebracht und das dabei gebildete Schleppgas-Wasserdampfgemisch vor Abscheidung der Feststoffpartikeln im Wärmeaustausch mit dem gereinigt abströmenden und komprimierten Schleppgas-Wasserdampfgemisch durch dessen Abkühlung bis unter die Sättigungs- beziehungsweise Taupunktstemperatur überhitzt wird.

2. Verfahren nach Anspruch 1 dadurch gekennzeichnet, daß das gereinigte Schleppgas-Wasserdampfgemisch vor einem Wärnieaustausch mit dem zu reinigenden Schieppgas-Wassergemisch erhitzt wird.

3. Verfahren nach Anspruch 2 dadurch gekennzeichnet, daß nach Kondensation und Abscheidung von Wasser aus dem gereinigten Schleppgas-Wasserdampfgemisch das Schleppgas im Kreislauf geführt und in den rückgeführten Schleppgasstrom erneut zu reinigendes Wasser in feiner Verteilung eingebracht wird.

4 . Verfahren nach Anspruch 3, dadurch gekennzeichnet, daß das im Kreislauf geführte Schleppgas vor oder während erneuter Zugabe von zu reinigenden Wassers entspannt wird.

5. Verfahren nach einem der vorhergehenden Ansprüche, dadurch gekennzeichnet, daß das zu reinigende Schleppgas-Wasserdampfgemisch auf eine Temperatur erhitzt wird, die oberhalb der Zersetzungstemperatur von zumindest eines im Schleppgas-Wasserdampfgemisch enthaltenen Hydrates liegt.

6. Verfahren nach einem der vorhergehenden Ansprüche, dadurch gekennzeichnet, daß das zu reinigende Schleppgas-Wasserdampfgemisch vor oder bei Eintritt in den Abscheider auf einen Druck entspannt wird, bei dem das Schleppgas-Wasserdampfgemisch den Abscheider wassertröpfchenfrei durchsetzt.

7. Verfahren nach einem der vorhergehenden Ansprüche, dadurch gekennzeichnet, daß die Feststoffpartikeln im Schleppgas-Wasserdampfgemisch vor Eintritt in den Abscheider koaguliert werden.

8. Verfahren nach einem der vorhergehenden Ansprüche, dadurch gekennzeichnet, daß das zu reinigende Wasser dem Schleppgasstrom in einer solchen Menge zugegeben wird, daß sich im zum Abscheider geführten Schleppgas-Wasserdampfgemisch zwischen Schleppgaspartialdruck $P_{sch}$ und Gesamtdruck des Schleppgas-Wasserdampfgemisches $P_t$ ein Partialdruckverhältnis im Bereich zwischen $P_{sch}/P_t = 0{,}2$ bis 0,8 einstellt.

9. Verfahren nach einem der vorhergehenden Ansprüche, dadurch gekennzeichnet, daß das gereinigte Schleppgas-Wasserdampfgemisch auf einen Gesamtdruck im Bereich zwischen 3 bis 20 bar komprimiert wird.

10. Vorrichtung zur Abwasserreinigung mit einem Verdampfer für das zu reinigende Wasser und einer Einrichtung zur Entfernung des bei dem Verdampfen gebildeten Rückstandes zur Durchführung des Verfahrens nach Anspruch 1, dadurch gekennzeichnet, daß am Eingang (10) des Verdampfers (7) innerhalb einer einen Schleppgasstrom zum Verdampfer führenden Schleppgasleitung (9) eine Einrichtung (8) zur feinen Verteilung des zu reinigenden Wassers im Schleppgasstrom angeordnet ist und daß am Ausgang (12) des Verdampfers (7) für das durch Aufheizen im Verdampfer gebildete Schleppgas-Wasserdampfgemisch ein Abscheider (13) angeschlossen ist, der im abzichenden Schleppgas-Wasserdampfgemisch enthaltene Feststoffpartikeln zurückhält.

11. Vorrichtung nach Anspruch 10, dadurch gekennzeichnet, daß am Abscheiderausgang (13a) ein das

gereinigte Schleppgas-Wasserdampfgemisch verdichtender Kompressor (20) angeschlossen ist, dessen Druckleitung (23) zum Eingang einer Heizmittelleitung (7') des Verdampfers (7) geführt ist und daß am Ende der Heizmittelleitung (7') eine Kondensatleitung (4) zum Abführen von im Verdampfer (7) entstehenden Kondensats sowie ein Abzug (27) für komprimiertes Schleppgas angeschlossen ist.

12. Vorrichtung nach einem der Ansprüche 10 oder 11, dadurch gekennzeichnet, daß für das gereinigte Schleppgas-Wasserdampfgemisch vor dessen Eintritt zur Heizmittelleitung (7') des Verdampfers (7) ein Erhitzer (22) vorgesehen ist.

13. Vorrichtung nach einem der Ansprüche 10, 11 oder 12, dadurch gekennzeichnet, daß der am Ende der Heizmittelleitung (7') des Verdampfers (7)'angeschlossene Abzug (27) für das Schleppgas in der zum Eingang (10) des Verdampfers (7) geführten Schleppgasleitung (9) mündet.

14. Vorrichtung nach Anspruch 1 , dadurch gekennzeichnet, daß an der Mündungsstelle des Abzugs (27) in die Schleppgasleitung (9) ein Druckregler (28) angeordnet ist.

15. Vorrichtung nach einem der Ansprüche 10 bis 14, dadurch gekennzeichnet, daß das vom Verdampfer (7) abströmende, zum Abscheider (13) geführte Schleppgas-Wasserdampfgemisch einen Druckminderer (16) durchströmt.

16. Vorrichtung nach einem der Ansprüche 10 bis 15, dadurch gekennzeichnet, daß für das vom Verdampfer (7) abströmende, zum Abscheider (13) geführte Schleppgas-Wasserdampfgemisch eine Wirbelkammer (16) zur Koagulation der im Schleppgas-Wasserdampfgemisch enthaltenen Feststoffpartikeln vorgesehen ist.

**Claims**

1. Method for the cleaning of waste water by finely dividing and evaporating the water to be cleaned in a flow of entraining gas with the use of heat from a compressed mixture of entraining gas and steam discharging in a cleaned state for the heating of entraining gas and water and removing the residue formed by superheating of the steam, characterised in that the water is introduced into an inert entraining gas flow, and before separation of the solids particles the mixture of entraining gas and steam formed when the water is introduced is superheated in heat exchange with the compressed mixture of entraining gas and steam discharging in a cleaned state by the cooling thereof to below the saturation or dew point temperature respectively.

2. Method according to claim 1, characterised in that the cleaned entraining gas and steam mixture is heated before a heat exchange is effected with the mixture of entraining gas and water which is to be cleaned.

3. Method according to claim 2, characterised in that after condensation and separation of water from the cleaned entraining gas and steam mixture the entraining gas is recycled, and water to be cleaned is introduced in finely divided form again into the returned flow of entraining gas.

4. Method according to claim 3, characterised in that the entraining gas which is recycled is expanded before or during the renewed introduction of water to be cleaned.

5. Method according to one of the preceding claims, characterised in that the entraining gas and steam mixture to be cleaned is heated to a temperature which is above the decomposition temperature of at least a hydrate contained in the entraining gas and steam mixture

6. Method according to one of the preceding claims, characterised in that the entraining gas and steam mixture to be cleaned is expanded, before or at introduction into the separator, to a pressure at which the entraining gas and steam mixture passes through the separator free of water droplets.

7. Method according to one of the preceding claims, characterised in that the solids particles in the entraining gas and steam mixture are coagulated before entry into the separator.

8. Method according to one of the preceding claims, characterised in that the water to be cleaned is introduced in such a quantity into the flow of entraining gas that a partial pressure ratio in the range $P_{sch}/P_t$ = 0.2 to 0.8 is established in the mixture of entraining gas and steam conducted to the separator between the entraining gas partial pressure $P_{sch}$ and the total pressure of the entraining gas and steam mixture $P_t$.

9. Method according to one of the preceding claims, characterised in that the cleaned entraining gas and steam mixture is compressed to a total pressure in the range between 3 and 20 bar.

10. Apparatus for the cleaning of waste water, with an evaporator for the water to be cleaned and with a device for removing the residue formed in the evaporation operation, for carrying out the method according to claim 1, characterised in that at the entry (10) of the evaporator (7), within an entraining gas conduit (9) conducting a flow of entraining gas to the evaporator, there is arranged a device (8) for the fine distribution in the flow of entraining gas of the water which is to be cleaned, and that there is connected to the outlet (12) of the evaporator (7) for the entraining gas and steam mixture formed through heating in the evaporator a separator (13) which retains particles of solids contained in the outgoing entraining gas and steam mixture.

11. Apparatus according to claim 10, characterised in that there is connected to the separator outlet (13a) a compressor (20) which compresses the cleaned entraining gas and steam mixture and whose pressure conduit (23) is taken to the inlet of a heating agent conduit (7') of the evaporator (7), and that there is connected to the end of the heating agent conduit (7') a condensate conduit (4) for discharging condensate formingin the evaporator (7) and also an outlet (27) for compressed entraining gas.

12. Apparatus according to one of claims 10 or 11, characterised in that a heater (22) is provided for the

cleaned entraining gas and steam mixture before the introduction thereof into the heating agent conduit (7') of the evaporator (7).

13. Apparatus according to one of claims 10, 11 or 12, characterised in that the outlet (27) connected to the end of the heating agent conduit (7') of the evaporator (7) and which is provided for the entraining gas opens into the entraining gas conduit (9) which extends to the inlet (10) of the evaporator (7).

14. Apparatus according to claim 1, characterised in that a pressure regulator (28) is arranged at the place where the outlet (27) opens into the entraining gas conduit (9).

15. Apparatus according to one of claims 10 to 14, characterised in that the entraining gas and steam mixture flowing out of the evaporator (7) and conducted to the separator (13) flows through a pressure reducing device (16).

16. Apparatus according to one of claims 10 to 15, characterised in that there is provided for the entraining gas and steam mixture flowing out from the evaporator (7) and conducted to the separator (13) a swirl chamber (16) for the coagulation of solid particles contained in the entraining gas and steam mixture.

**Revendications**

1. Procédé d'épuration des eaux résiduaires en répartissant finement et en évaporant l'eau à épurer dans un courant de gaz d'entraînement, tout en utilisant le mélange de gaz d'entraînement et de vapeur d'eau sortant épuré et comprimé pour réchauffer le gaz d'entraînement et l'eau, et en éliminant le résidu formé par la surchauffe de la vapeur d'eau, caractérisé en ce qu'il consiste à introduire l'eau dans un courant de gaz d'entraînement inerte, et à surchauffer le mélange de gaz d'entraînement et de vapeur d'eau ainsi formé, avant le dépôt de particules de matières solides, par échange de chaleur avec le mélange de gaz d'entraînement et de vapeur d'eau sortant épuré et comprimé, avec refroidissement de celui-ci jusqu'à une température inférieure à son point de saturation ou à son point de rosée.

2. Procédé suivant la revendication 1, caractérisé en ce qu'il consiste à chauffer le mélange de gaz d'entraînement et de vapeur d'eau épuré, avant un échange de chaleur avec le mélange de gaz d'entraînement et d'eau à épurer.

3. Procédé suivant la revendication 2, caractérisé en ce qu'il consiste à faire circuler le gaz d'entraînement en circuit fermé, après la condensation et la séparation de l'eau du mélange de gaz d'entraînement et de vapeur d'eau épuré et à introduire à nouveau de l'eau à épurer finement répartie dans le courant de gaz d'entraînement recyclé.

4. Procédé suivant la revendication 3, caractérisé en ce qu'il consiste à détendre le gaz d'entraînement circulant en circuit fermé avant ou pendant l'addition renouvelée d'eau à épurer.

5. Procédé suivant l'une des revendications précédentes, caractérisé en ce qu'il consiste à porter le mélange de gaz d'entraînement et de vapeur d'eau à épurer à une température qui est supérieure à la température de décomposition d'au moins un hydrate contenu dans le mélange de gaz d'entraînement et de vapeur d'eau.

6. Procédé suivant l'une des revendications précédentes, caractérisé en ce qu'il consiste à détendre le mélange de gaz d'entraînement et de vapeur d'eau à épurer avant ou lors de l'entrée dans le séparateur, à une pression sous laquelle le mélange de gaz d'entraînement et de vapeur d'eau passe dans le séparateur en étant exempt de gouttelettes d'eau.

7. Procédé suivant l'une des revendications précédentes, caractérisé en ce qu'il consiste à coaguler les particules de matières solides du mélange de gaz d'entraînement et de vapeur d'eau, avant l'entrée dans le séparateur.

8. Procédé suivant l'une des revendications précédentes, caractérisé en ce qu'il consiste à ajouter l'eau à épurer au courant de gaz d'entraînement en une quantité telle qu'il s'établit dans le mélange de gaz d'entraînement et de vapeur d'eau envoyé au séparateur un rapport des pressions partielles entre la pression partielle du gaz d'entraînement $P_{sch}$ et la pression totale du mélange de gaz d'entraînement et de vapeur d'eau $P_t$ tel que $P_{sch}/P_t$ soit compris entre entre 0,2 et 0,8.

9. Procédé suivant l'une des revendications précédentes, caractérisé en ce qu'il consiste à comprimer le mélange de gaz d'entraînement et de vapeur d'eau épuré sous une pression totale comprise entre 3 et 20 bar.

10. Installation d'épuration des eaux résiduaires, comprenant un évaporateur pour l'eau à épurer et un dispositif pour éliminer le résidu formé lors de l'évaporation, destinée à la mise en oeuvre du procédé suivant la revendication 1, caractérisée en ce qu'à l'entrée (10) de l'évaporateur (7) est disposé, à l'intérieur d'un conduit pour le gaz d'entraînement (9) amenant un courant de gaz d'entraînement à l'évaporateur, un dispositif (8) destiné à répartir finement l'eau à épurer dans le courant de gaz d'entraînement, et en ce que, à la sortie (12) de l'évaporateur (7) du mélange de gaz d'entraînement et de vapeur d'eau formé par le chauffage dans l'évaporateur est raccordé un séparateur (13) qui retient les particules de matières solides contenues dans le mélange de gaz d'entraînement et de vapeur d'eau qui est soutiré.

11. Installation suivant la revendication 10, caractérisé en ce qu'à la sortie du séparateur (13a) est raccordé un compresseur (20) comprimant le mélange de gaz d'entraînement et de vapeur d'eau épuré et dont le conduit de refoulement mène à l'entrée d'un conduit pour l'agent de chauffage (7') de l'évaporateur (7), et en ce qu'à l'extrémité du conduit pour l'agent de chauffage (7') est raccordé un conduit pour le produit condensé (4) en vue d'évacuer le prcduit condensé qui se forme dans l'évaporateur (7), ainsi qu'une évacuation (27) pour le gaz

d'entraînement comprimé.

12. Installation suivant l'une des revendications 10 ou 11, caractérisée en ce qu'il est prévu un dispositif de chauffage (22) du mélange de gaz d'entraînement et de vapeur d'eau épuré, avant son entrée dans le conduit pour l'agent de chauffage (7') de l'évaporateur (7).

13. Installation suivant l'une des revendications 10, 11 ou 12, caractérisée en ce que l'évacuation (27) raccordée à l'extrémité du conduit pour l'agent de chauffage (7') de l'évaporateur (7) et destinée au gaz d'entraînement débouche dans le conduit pour le gaz d'entraînement (9) menant à l'entrée (10) de l'évaporateur (7).

14. Installation suivant la revendication 1, caractérisée en ce qu'à l'emplacement où l'évacuation (27) débouche dans le conduit pour le gaz d'entraînement (9), est disposé un régulateur de pression (28).

15. Installation suivant l'une des revendications 10 à 14, caractérisée en ce que le mélange de gaz d'entraînement et de vapeur d'eau sortant de l'évaporateur (7) et allant au séparateur (13) passe dans un dispositif d'abaissement de la pression (16).

16. Installation suivant l'une des revendications 10 à 15, caractérisée en ce qu'il est prévu, pour le mélange de gaz d'entraînement et de vapeur d'eau sortant de l'évaporateur (7) et allant au séparateur (13), une chambre de fluidisation (16) pour la coagulation des particules de matières solides contenues dans le mélange de gaz d'entraînement et de vapeur d'eau.

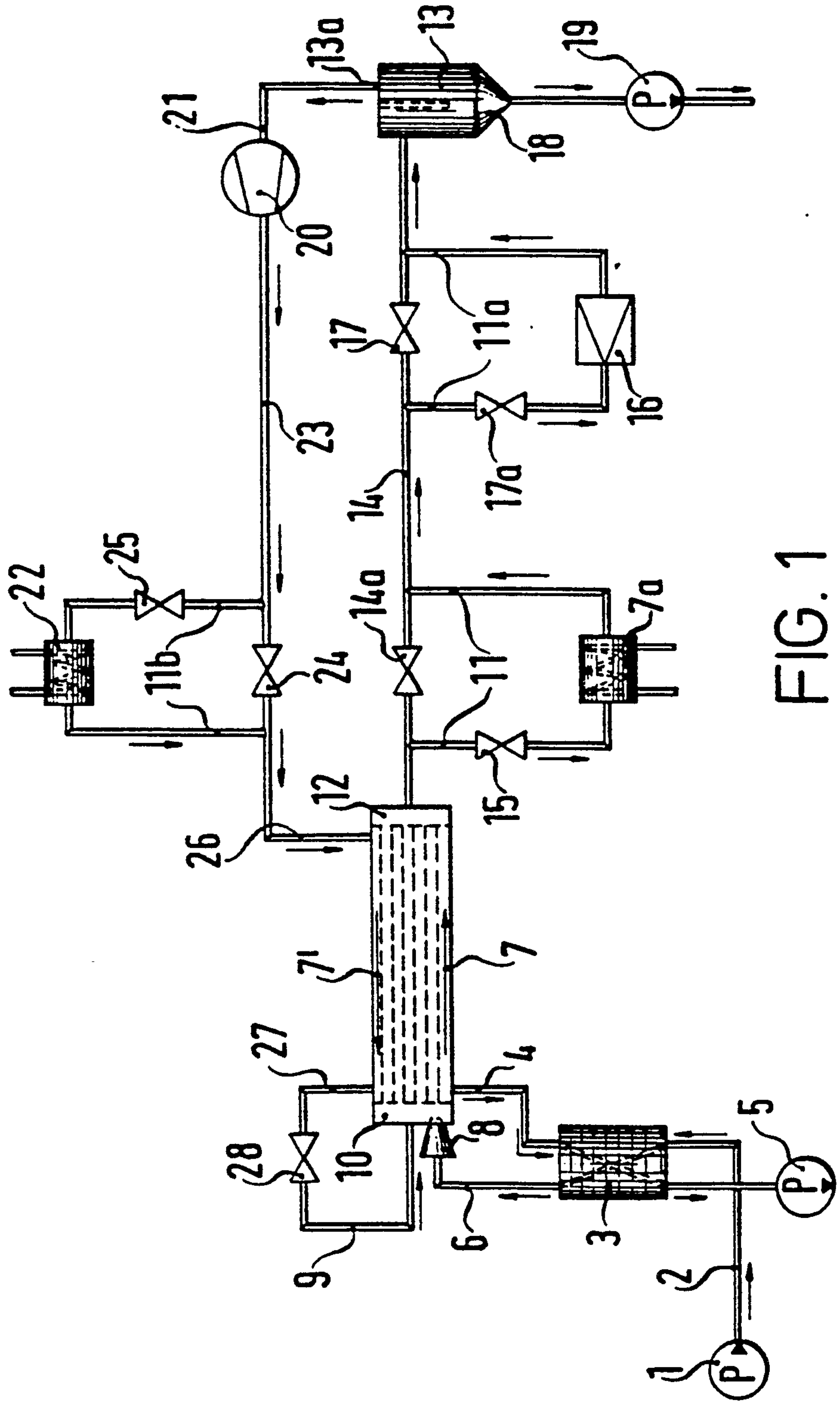
1
2
3
4
5
6
7
7'
7a
8
9
10
11
11a
11b
12
13
13a
14
14a
15
16
17
17a
18
19
20
21
22
23
24
25
26
27
28
P

FIG. 1

FIG. 2

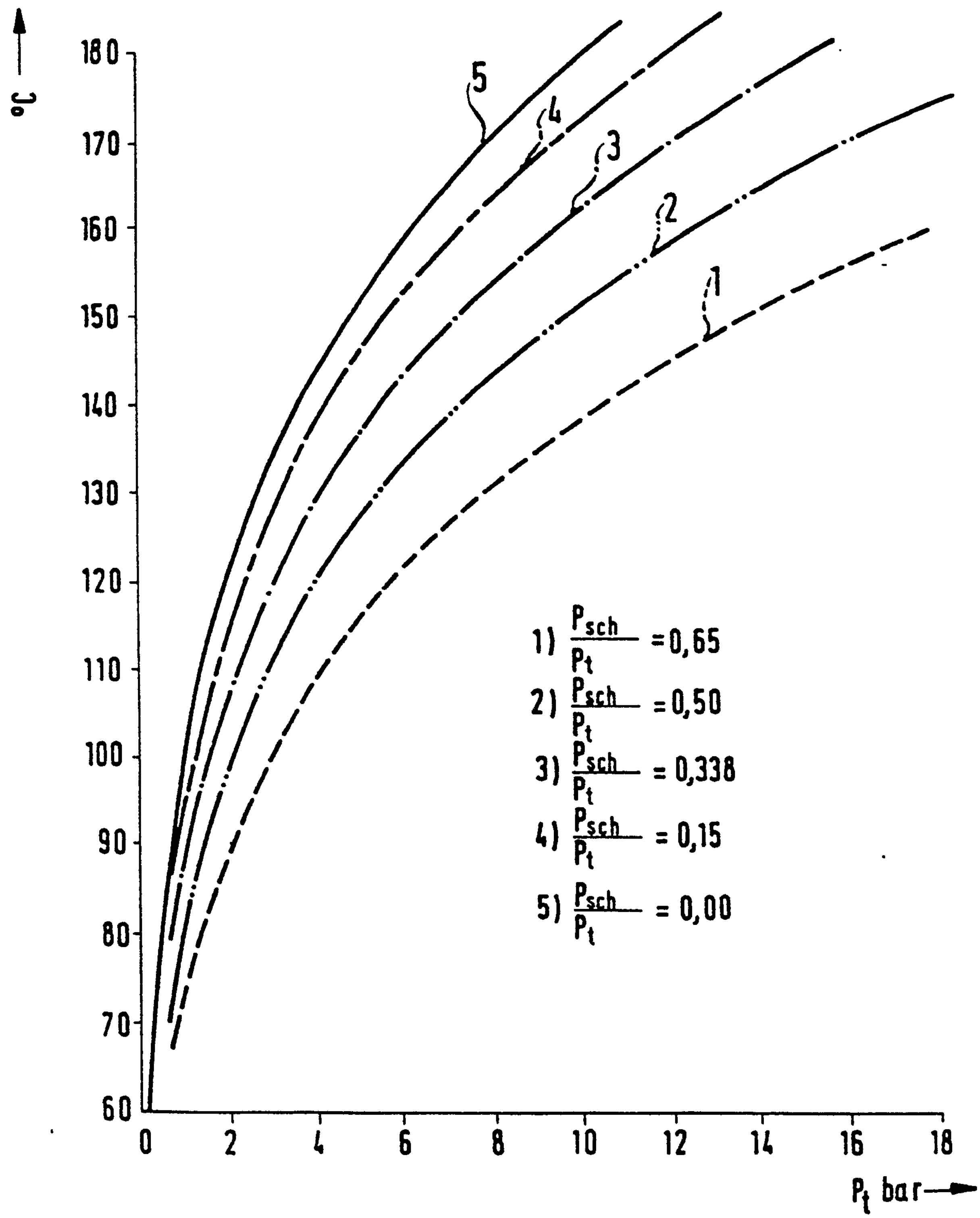
Jo
180
170
160
150
140
130
120
110
100
90
80
70
60
0
2
4
6
8
10
12
14
16
18
Pt bar
1
2
3
4
5
1) Psch/Pt = 0,65
2) Psch/Pt = 0,50
3) Psch/Pt = 0,338
4) Psch/Pt = 0,15
5) Psch/Pt = 0,00